# DEMANDE DE BREVET EUROPEEN

(11) **EP 2 053 712 A1**
(43) Date de publication de la demande: **29.04.2009**
(21) Numéro de dépôt: 08167356.8
(22) Date de dépôt: 23.10.2008
(51) Int. Cl.: H02B 1/044

(54) **Auxiliaire de commande, de signalisation et/ou d'avertissement à montage rapide**

(30) Priorité: 23.10.2007 FR 0758483
(71) Demandeur: Mafelec, 38490 Chimilin (FR)
(72) Inventeur: Girin, Emmanuel, 73240, LAVERELLE (FR); Legrand, Bertrand, 38000, GRENOBLE (FR)
(74) Mandataire: Thibault, Jean-Marc

(57) **Abrégé**

L'invention concerne un auxiliaire de commande, de signalisation et/ou d'avertissement destiné à être fixé sur une paroi **(2),** l'auxiliaire comportant :
- un boîtier **(3)** comportant une collerette d'appui **(4)** sur une première face de la paroi, et à partir de laquelle s'étend un corps tubulaire **(5)** d'axe longitudinal **(x)** destiné à traverser un trou **(6)** aménagé dans la paroi **(2),**
- une bride **(10)** destinée à être montée du côté de la deuxième face de la paroi, et présentant un alésage **(12)** d'emboitement pour le corps **(5)** du boîtier de commande,

## Description

La présente invention concerne le domaine technique du montage sur une paroi, d'un auxiliaire de commande, de signalisation et/ou d'avertissement au sens général, se présentant sous la forme par exemple d'un interrupteur lumineux ou non, d'un voyant, ou d'un avertisseur sonore lumineux ou non.

L'objet de l'invention trouve une application particulièrement avantageuse mais non exclusivement pour le montage d'un auxiliaire sur une paroi fragile telle qu'en verre.

Dans l'état de la technique, il existe de nombreuses solutions pour monter un auxiliaire sur une paroi. Une des solutions les plus répandues consiste à réaliser des perçages dans la paroi, de manière à fixer l'auxiliaire à l'aide de vis. Cette solution présente un risque réel de détérioration de la paroi, notamment pour une paroi en verre, lors de l'opération de perçage, mais surtout lors du vissage par l'application d'un couple de vissage trop important.

Pour remédier à cet inconvénient, il est connu notamment par le document EP 0 982 814 de monter l'auxiliaire par l'intermédiaire d'un système vis/écrou. Selon cet exemple de réalisation, le corps de l'auxiliaire qui traverse la paroi par un trou, est pourvu à sa périphérie d'un filetage destiné à coopérer avec un écrou. Cette solution ne nécessite pas de réaliser des perçages dans la paroi, si ce n'est le trou de passage pour le corps de l'auxiliaire. Toutefois, un tel auxiliaire présente généralement un encombrement important, en raison de la mise en oeuvre d'un écrou coopérant avec une partie filetée du corps de l'auxiliaire. De plus, il apparaît fréquemment nécessaire d'avoir recours à un outil de manoeuvre de l'écrou pour obtenir un serrage sûr et efficace de l'auxiliaire sur la paroi.

L'objet de l'invention vise à remédier aux inconvénients des solutions techniques connues, en proposant un nouvel auxiliaire de commande, de signalisation et/ou d'avertissement présentant un encombrement limité tout en étant adapté pour pouvoir être monté sur une paroi sans risque de détérioration de cette dernière, et sans avoir recours à un outil de montage.

Pour atteindre un tel objectif, l'auxiliaire de commande, de signalisation et/ou d'avertissement destiné à être fixé sur une paroi, comporte :
- un boîtier comportant une collerette d'appui sur une première face de la paroi, et à partir de laquelle s'étend un corps tubulaire d'axe longitudinal destiné à traverser un trou aménagé dans la paroi,
- une bride destinée à être montée du côté de la deuxième face de la paroi, et présentant un alésage d'emboitement pour le corps du boîtier de commande.

Selon l'invention, l'auxiliaire comporte des moyens ponctuels de verrouillage comportant au moins une face ponctuelle de verrouillage aménagée sur la bride ou le corps selon une plage angulaire limitée, et au moins une rampe ponctuelle avec un profil en hélice centré sur l'axe longitudinal et aménagée respectivement sur le corps ou la bride selon une plage angulaire limitée, ces moyens ponctuels de verrouillage étant aptes à occuper une position de déverrouillage pour laquelle la bride et le boîtier peuvent être rapprochés axialement jusqu'à une position où une rotation relative autour de l'axe entre la bride et le boîtier assure une coopération entre la face ponctuelle et la rampe ponctuelle, conduisant à un rapprochement axial entre la bride et le boîtier et leur verrouillage.

Un autre objet de l'invention vise à offrir un nouvel auxiliaire de commande, de signalisation et/ou d'avertissement, adapté pour pouvoir être monté automatiquement sur la paroi, tout en offrant l'avantage de s'adapter aux différentes épaisseurs présentées par les parois de montage.

Pour atteindre un tel objectif, l'auxiliaire de commande, de signalisation et/ou d'avertissement selon l'invention comporte :
- un organe élastique de déplacement en rotation, autour de l'axe, de la bride, sollicitant la bride en position de déverrouillage,
- des moyens de blocage de la bride en position de déverrouillage et des moyens de libération de la bride pour autoriser le passage automatique de la bride de sa position de déverrouillage à sa position de verrouillage.

Par exemple, l'organe de déplacement est un ressort de rappel interposé entre la bride mobile et un support de montage de la bride.

Selon une forme préférée de réalisation, les moyens de libération de la bride comportent un téton mobile de déblocage s'étendant en saillie à partir de la face du support destinée à être en appui sur la deuxième face de la paroi, de manière que son déplacement entraîne automatiquement la libération de la bride.

Selon une autre forme préférée de réalisation, les moyens de blocage comportent des moyens assurant le retour réversible de la bride de sa position de libération à sa position de blocage lors de la rotation de la bride, selon un sens contraire au sens de rotation conduisant au passage de la position de déverrouillage à la position de verrouillage.

Avantageusement, les moyens de blocage comportent une butée portée par le support ou la bride coopérant avec un bras élastique porté respectivement par la bride mobile ou le support.

Selon un exemple préféré, les moyens ponctuels de verrouillage comportent une série de rampes ponctuelles distribuées à la périphérie du corps ou de la bride selon un profil en hélice, et une série de faces ponctuelles telles que des contre-rampes distribuées à la périphérie respectivement de la bride ou du corps, selon un profil en hélice, les rampes délimitant entre elles des passages axiaux pour les contre-rampes qui délimitent entre elles des passages axiaux pour les rampes.

Avantageusement, les rampes et contre-rampes sont aménagées de manière à coopérer mutuellement sur une course angulaire adaptée pour assurer un rapprochement axial suffisant entre le boîtier et la bride, afin de s'adapter aux différentes épaisseurs des parois de montage.

A titre d'exemple, chaque rampe ou contre-rampe présente une pente inférieure à 30 degrés par rapport au plan perpendiculaire à l'axe longitudinal.

Selon un exemple de réalisation, la bride est réalisée par une bague ouverte guidée en rotation par une jupe portée par le support et délimitant un passage de réception du corps du boîtier.

Avantageusement, les rampes et les contre-rampes délimitent au moins un passage pour le positionnement d'un câble de raccordement.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en éclaté d'un exemple de réalisation d'un auxiliaire conforme à l'invention.
La **Figure 2** est une vue en perspective montrant l'auxiliaire en cours de montage sur une paroi.
La **Figure 3** est une vue en perspective de l'auxiliaire en position montée mais non verrouillée.
La **Figure 4** est une vue en coupe élévation de l'auxiliaire en cours de montage, tel qu'illustré à la **Fig. 2**.
Les **Figures 5** et **6** sont des vues en perspective partiellement écorchées montrant l'auxiliaire monté sur deux parois d'épaisseurs différentes.
La **Figure 7** est une vue en perspective montrant un détail caractéristique de l'objet de l'invention.
La **Figure 8** est une vue en perspective partiellement écorchée montrant un détail caractéristique de l'objet de l'invention.

Tel que cela ressort des Figures, l'objet de l'invention concerne un auxiliaire de commande, de signalisation et/ou d'avertissement **1**, destiné à être fixé sur une paroi **2** au sens général. L'auxiliaire **1** est de tout type connu et peut être un interrupteur lumineux ou non, un voyant ou un avertisseur sonore lumineux ou non. L'auxiliaire **1** ne sera pas décrit plus précisément, car sa construction ne fait pas partie précisément de la présente invention.

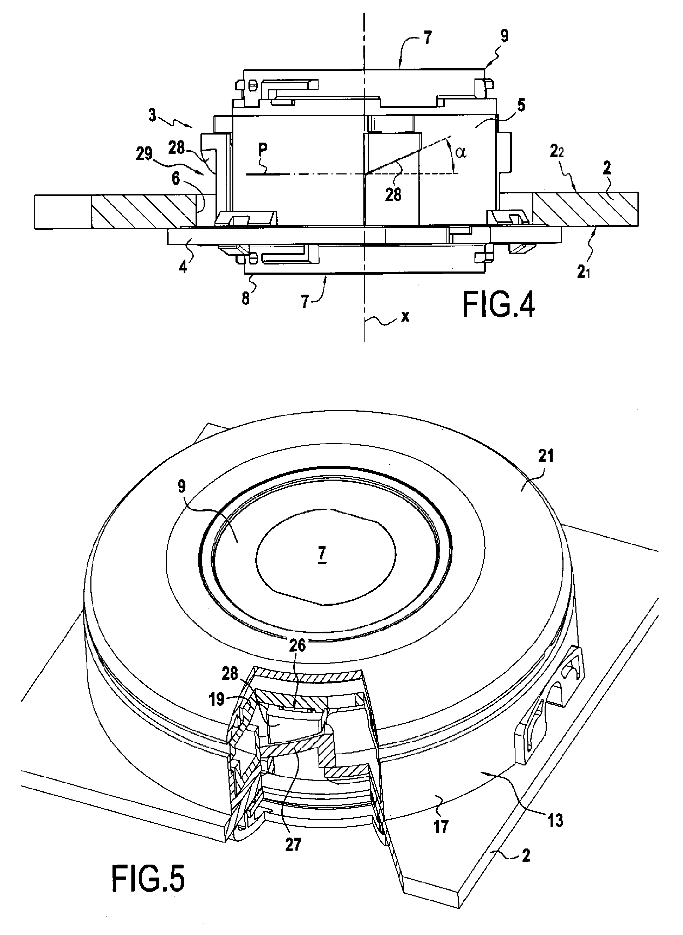

D'une manière générale, l'auxiliaire **1** comprend un boîtier **3** comportant une collerette d'appui **4** de section circulaire, à partir de laquelle s'étend un corps tubulaire **5** centré selon l'axe longitudinal **x** de symétrie de l'auxiliaire. Le corps tubulaire **5** présente une section droite transversale à caractère circulaire. Le corps tubulaire **5** est destiné à traverser la paroi **2** par un trou **6**. Le boîtier **3** est donc destiné à être monté de manière que le corps tubulaire **5** se trouve emboîté dans le trou **6**, de sorte que la collerette **4** vienne en appui sur une première face, par exemple **2₁** de la paroi **2** (**Fig. 4**). De préférence, un joint d'étanchéité et de tenue en rotation est interposé entre la face **2₁** de la paroi et la collerette **4**.

Dans l'exemple illustré, l'auxiliaire **1** comporte un organe **7** de commande ou de visualisation, accessible ou visible de part et l'autre de la paroi **2**. Bien entendu, il peut être envisagé de mettre en oeuvre un auxiliaire **1** comportant un organe **7** accessible ou visible uniquement sur l'un des côtés de la paroi. Dans l'exemple illustré, chaque organe **7** est placé sur les parois transversales **8** et **9** du corps **5**, dont l'une **8** s'étend par exemple légèrement en saillie par rapport à la collerette d'appui **4** (**Fig. 4**).

L'auxiliaire **1** comporte une bride **10** destinée à être montée du coté d'une deuxième face **2₂** de la paroi **2** opposée à la première face **2₁**. Cette bride **10** est réalisée avantageusement sous la forme d'une bague ouverte, délimitant en son milieu, un passage **12** d'emboîtement pour le corps **5**. En d'autres termes, la bride **10** est dimensionnée pour venir s'étendre autour du corps tubulaire **5**. Le passage **12** de la bride **10** possède donc une section circulaire supérieure à la section circulaire du corps **5**.

Selon une variante préférée de réalisation, la bride **10** est montée dans un support **13** réalisé sous la forme d'une bague annulaire délimitant en son centre un passage **14** d'emboîtement pour le corps **5**. Le passage **14** du support **13** possède donc une section circulaire supérieure à la section circulaire du corps **5**, pour autoriser le support **13** à venir s'engager autour du corps **5**.

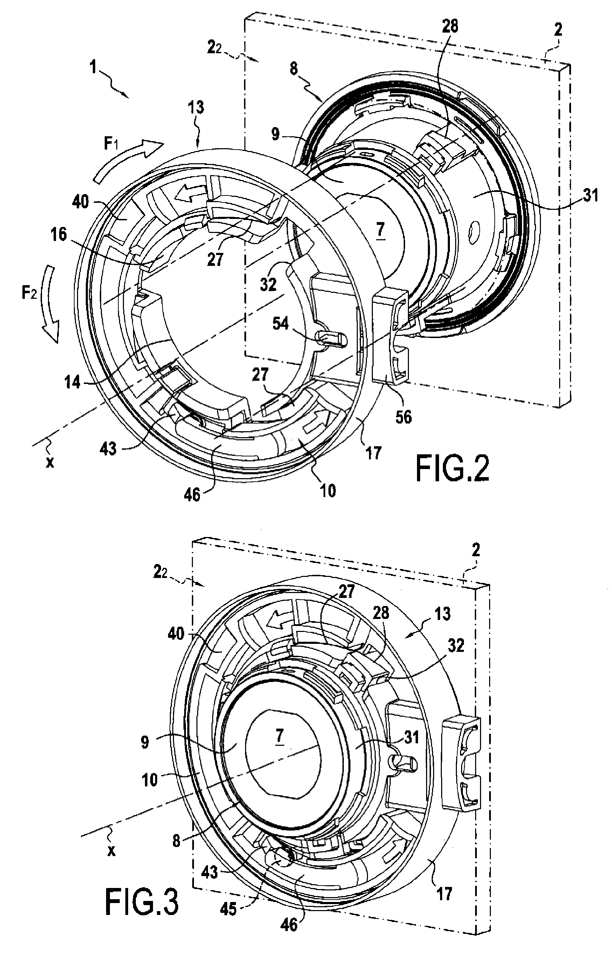

Par exemple, le support 13 possède une paroi de fond annulaire **15** s'étendant dans un plan transversal à l'axe **x**. Cette paroi de fond **15** est destinée à venir en appui, par son côté externe, contre la deuxième face **2₂** de la paroi **2**. De préférence, un joint d'étanchéité et de tenue en rotation est interposé entre la paroi de fond **15** et la deuxième face **2₂** de la paroi. Cette paroi de fond **15** est prolongée à l'équerre à partir de son côté interne, d'une jupe **16** bordant l'alésage **14** et s'étendant concentriquement à un rebord périphérique **17**. Tel que cela ressort clairement des **Fig. 2** et **3**, la bride **10** est donc montée dans le logement délimité par le fond **15** bordé par la jupe **16** et le rebord périphérique **17**.

Tel que cela ressortira plus précisément de la suite de la description, la bride **10** se trouve guidée en rotation autour de l'axe x par le support **13**. Selon cet exemple de réalisation, le support **13** est destiné, après le montage de la bride **10** à l'intérieur du support **13**, à être fermé par un couvercle **19** monté par exemple par encliquetage sur le rebord **17** et/ou la jupe **16.** Le couvercle **19** est pourvu en son centre, d'un passage d'accès **20** à l'organe **7**. Par exemple, la paroi transversale **9** du corps **5** s'étend sensiblement au niveau du couvercle **19** après montage de l'auxiliaire **1**. De façon classique, l'auxiliaire **1** est destiné à être équipé de part et d'autre, d'enjoliveurs **21** et **22**, destinés à venir recouvrir respectivement le couvercle **19** et la collerette d'appui **4** et présentant respectivement des passages d'accès **23**, **24** aux organes **7** de l'auxiliaire **1**.

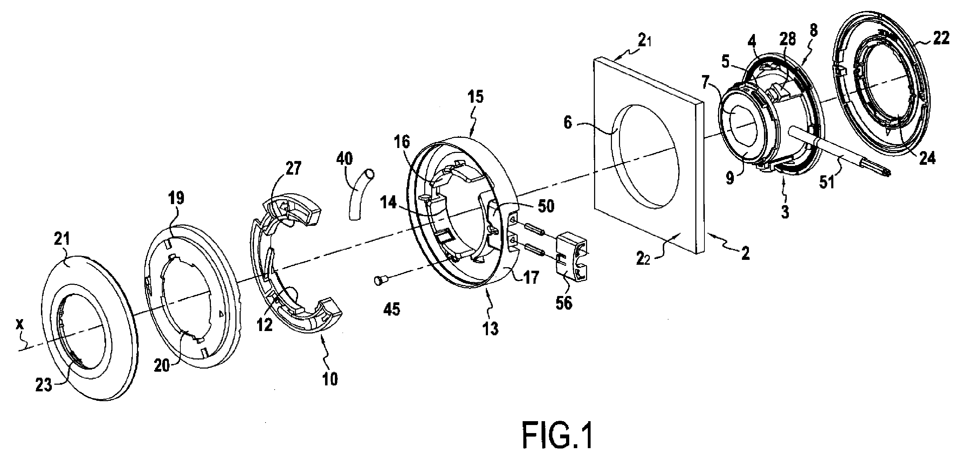

Conformément à l'invention, l'auxiliaire **1** comporte des moyens ponctuels de verrouillage **26** comportant au moins une face ponctuelle de verrouillage **27** aménagée sur la bride **10** ou le corps **5**, et au moins une rampe ponctuelle **28** aménagée respectivement sur le corps **5** ou la bride **10**. Dans l'exemple de réalisation illustré sur les dessins, les moyens ponctuels de verrouillage comportent trois faces ponctuelles de verrouillage **27**, aménagées sur la bride **10** et trois rampes ponctuelles **28** aménagées sur le corps **5** (Fig. **1**, **5** et **6**).

Chaque rampe ponctuelle **28** présente un profil en hélice centré sur l'axe longitudinal **x**. Les rampes ponctuelles **28** s'étendent ainsi selon un chemin commun ou non, en hélice ou hélicoïdal centré sur l'axe **x**. Il doit être compris que chaque rampe ponctuelle **28** est réalisée par une surface s'élevant en saillie à partir du corps **5** et tournée vers la collerette d'appui **4**. Chaque rampe ponctuelle **28** s'étend donc dans un plan qui est sécant par rapport à l'axe x. Les rampes ponctuelles **28** sont donc aménagées à distance de la collerette **4**, de manière qu'en position d'appui de la collerette **4** sur la face **2₁** de la paroi, les rampes ponctuelles **28** se trouvent situées du côté de la face opposée **2**₂ de la paroi, en laissant subsister avec cette dernière, un espace **29** adapté pour autoriser l'insertion des faces ponctuelles **27** de la bride **10** (**Fig. 4**).

Selon une caractéristique préférée de réalisation, chaque face ponctuelle de verrouillage **27** est réalisée par une contre-rampe présentant un profil en hélice par rapport à l'axe **x**, complémentaire au profil en hélice d'une rampe ponctuelle **28**. Chaque contre-rampe **27** est donc réalisée par une surface saillante s'étendant dans un plan sécant par rapport à l'axe x, en étant tournée ou orientée à l'opposé de la paroi de fond **15** du support **13**. Bien entendu, chaque face ponctuelle **27** peut être réalisée par une surface ponctuelle s'étendant perpendiculairement par rapport à l'axe **x**.

Selon une caractéristique préférée de réalisation, chaque rampe **28** et contre-rampe **27** présentent une pente d'un angle α inférieur à 30° par rapport au plan **P** perpendiculaire à l'axe **x** (**Fig**. **4**). Tel que cela ressort plus précisément des **Fig. 2** et **4**, les rampes ponctuelles **28** sont réparties à la périphérie du corps **5** en étant décalées deux à deux d'environ 120°. Par exemple, chaque rampe ponctuelle **28** s'étend sur une plage angulaire limitée inférieure à 180° et par exemple de l'ordre de 10 à 20°. De même, les contre-rampes ponctuelles **27** sont réparties sur la bride **10**, entre la jupe **16** et le rebord **17**, en étant décalées deux à deux d'une largeur angulaire de 120°. Par exemple, chaque contre-rampe ponctuelle **27** s'étend sur une plage angulaire limitée inférieure à 180° et par exemple de l'ordre de 10 à 20°.

Tel que cela ressort plus précisément de la **Fig. 2**, les rampes **28** délimitent entre elles, c'est-à-dire selon une section transversale à l'axe **x**, des passages **31** permettant le positionnement axial dans cet espace d'une contre-rampe **27**. De même, les contre-rampes **27** délimitent entre elles, c'est-à-dire selon une section transversale à l'axe **x**, des espaces **32** pour permettre le passage axial des rampes **28**. Dans l'exemple illustré, il doit être considéré que la jupe **16** du support est pourvue de dégagements **32** pour permettre l'emboîtement axial des rampes **28** qui viennent ainsi se positionner à l'intérieur du support **13**, chacune en saillie par rapport à la jupe **16**.

Il doit être compris que les rampes **28** et les contre-rampes **27** sont aménagées de manière à permettre leur emboîtement mutuel ou le rapprochement axial selon l'axe **x** entre la bride **10** et le boîtier **3**, de sorte que les rampes **28** et les contre-rampes **27** s'établissent sensiblement selon une même section droite transversale perpendiculaire à l'axe x. Les rampes **28** et contre-rampes **27** occupent une position de déverrouillage pour laquelle la bride **10** et le boîtier **3** peuvent être déplacés librement en écartement ou rapprochement selon l'axe **x**. Le support **13** peut ainsi être emboîté à partir de l'extrémité libre **9** du corps **5** de manière que les contre-rampes **27** puissent s'établir sensiblement au même niveau que les rampes **28**, de sorte qu'une rotation de la bride **10** dans le sens de la flèche **F₁** conduit à une coopération entre les rampes ponctuelles **28** et les contre-rampes ponctuelles **27**. Un tel engagement mutuel selon un profil en hélice conduit à un rapprochement axial entre la bride **10** et le boîtier **3**, assurant ainsi l'assemblage de l'auxiliaire sur la paroi **2**. Les rampes **28** et contre-rampes **27** occupent ainsi une position de verrouillage pour laquelle les rampes **28** et les contre-rampes **27** se retrouvent en vis-à-vis ou en regard selon l'axe **x**.

Selon une variante préférée de réalisation, chaque rampe **28** et/ou contre-rampe **27** est pourvue d'un revêtement anti-dérapant permettant d'augmenter le coefficient de friction de la rampe et/ou de la contre-rampe en vue d'assurer le maintien en position verrouillée de la bride. Chaque rampe **28** et/ou contre-rampe **27** est pourvue par exemple d'un patin, d'une garniture ou d'un film anti-dérapant.

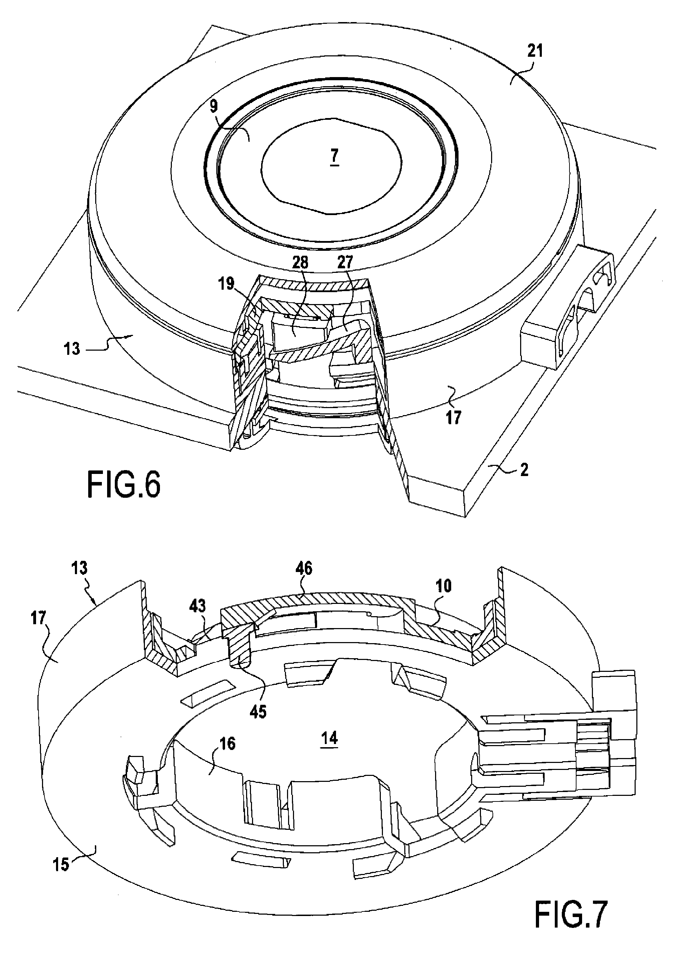

Il doit être compris que le rapprochement axial entre le boîtier **5** et la bride **10**, et par suite du support **13**, est obtenu jusqu'à la mise en appui du fond **15** du support sur la paroi **2**. L'auxiliaire **1** est ainsi monté sans jeu sur la paroi, pour la mise en appui, de part et d'autre de la paroi **2**, de la collerette **4** et du fond **15**. Une telle disposition permet de s'adapter aux différentes épaisseurs de la paroi **2**, comme le montrent clairement les **Fig. 5** et **6** qui illustrent le montage d'un auxiliaire sur une paroi **2**, dont l'épaisseur à la **Fig. 5** est inférieure à l'épaisseur de la paroi **2** illustrée à la **Fig. 6**. Il ressort de la **Fig. 6** que les contre-rampes **27** coopèrent avec les rampes **28** sur une plage angulaire réduite par rapport à l'engagement obtenu à la **Fig. 5**. Dans tous les cas de figures, l'engagement mutuel des rampes **28** et des contre-rampes **27** empêche l'extraction selon l'axe **x** du boîtier **3** par rapport au support **13**.

Selon une caractéristique préférée de réalisation, l'auxiliaire **1** comporte un organe élastique **40** de déplacement en rotation de la bride **10** autour de l'axe x. Avantageusement, cet organe élastique **40** est réalisé par un ressort sollicitant la bride **10** en position de déverrouillage. En d'autres termes, la bride est sollicitée par le ressort **40** dans une position où les contre-rampes **27** sont positionnées de manière à permettre le déplacement axial relatif entre la bride **10** et le boîtier **3**. Ce ressort **40** est fixé entre la bride **10** et le fond **15** du support **13**.

L'auxiliaire **1** comporte également des moyens de blocage **43** de la bride **10** lorsqu'elle occupe la position de déverrouillage et des moyens de libération **45** de la bride, pour autoriser le passage automatique de la bride, de sa position de déverrouillage à sa position de verrouillage. Tel que cela ressort plus précisément des **Fig. 2** et **7**, les moyens de blocage **43** sont réalisés par une butée présentée par le fond **15** du support **13** et sur laquelle vient en appui un bras élastique **46** présenté par la bride **10**. Les moyens de libération **45** permettent au bras élastique **46** d'échapper à la butée **43**, de sorte que sous l'action du ressort **40,** la bride **10** est déplacée en rotation selon la flèche **F₁** autour de l'axe **x**. Le déplacement de la bride **10** conduit ainsi les contre-rampes **27** à venir coopérer avec les rampes **28**.

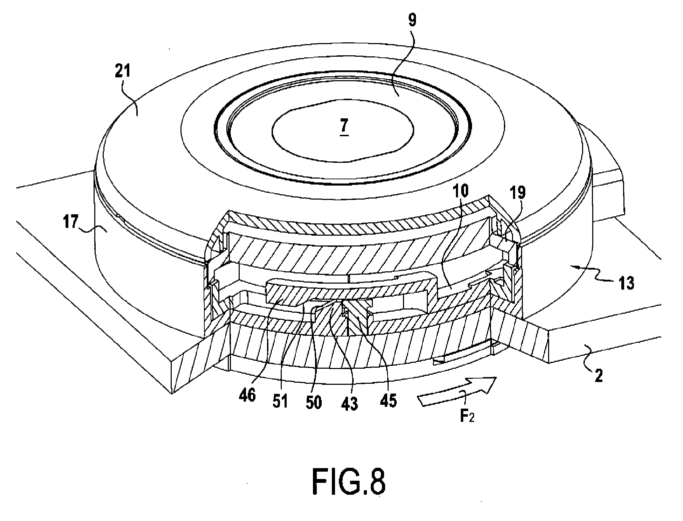

Selon une variante préférée de réalisation, les moyens de libération **45** sont adaptés pour assurer un déblocage automatique de la bride **10** lors du montage du support **13** sur la paroi. Dans l'exemple de réalisation, les moyens de libération **45** comportent un pion traversant monté dans la paroi de fond **15** du support **13**, à proximité de la butée **43** (**Fig. 7**). Lorsque le ressort **40** sollicite la bride **10**, en appui sur la butée **43**, l'extrémité du bras élastique 46 est en appui également sur le pion **45** dont une partie s'étend en saillie par rapport à la paroi de fond **15** du support **13**. Un appui sur le pion **45** tendant à le faire rentrer à l'intérieur du support **13** conduit au déplacement de l'extrémité libre du bras **46**, permettant à ce dernier d'échapper à la butée **43** (**Fig. 8**). Dans la mesure où le bras élastique **46** ne se trouve plus en appui contre la butée **43**, la bride **10** sous l'action du ressort **40** est déplacée en rotation automatiquement de manière que les contre-rampes **27** viennent coopérer avec les rampes **28**. Le ressort **40** permet ainsi de maintenir les rampes **28** et les contre-rampes **27** en position engagée.

Bien entendu, le pion **45** est adapté pour être maintenu à l'intérieur du trou de montage aménagé dans le fond **15** du support **13**. Par exemple, le pion **45** comporte un épaulement bloquant son extraction à travers le fond **15**. Par ailleurs, le pion **45** est bloqué en direction de l'intérieur du support **13** par le bras élastique **46** qui présente un dégagement par rapport à son extrémité, adapté pour permettre l'escamotage du pion à l'intérieur du support tout en restant engagé dans le fond.

Selon une caractéristique préférée de réalisation, les moyens de blocage **43** comportent des moyens **50** assurant le retour réversible de la bride de sa position de libération à sa position de blocage, lors de la rotation de la bride **10** selon un sens **F₂** contraire au sens de rotation **F₁**.

Tel que cela ressort de la **Fig. 8**, la butée **43** est aménagée pour présenter du côté opposé au pion **45**, un profil incliné **50** coopérant avec un profil incliné complémentaire **51** aménagé sur le bras élastique **46** de la bride **10**. A partir de la position libérée de la bride **10** illustrée à la **Fig. 8** (dans laquelle les rampes **28** coopèrent avec les contre-rampes **27**), un déplacement de la bride **10** dans le sens de la flèche **F₂** conduit au soulèvement du bras élastique **46** par la coopération des profils **50**, **51**, de sorte que le bras élastique **46** puisse passer de l'autre côté de la butée **43** pour être en appui sur cette dernière (**Fig. 7**).

Bien entendu, la mise en appui du bras élastique **46** sur la butée **43** est possible après avoir repoussé le pion **45** en dehors du fond **15**. Avantageusement, le positionnement du pion **45** en saillie par rapport au fond **15** est réalisé automatiquement lors de l'opération de réarmement de la bride **10**. En effet, le déplacement de la bride **10** selon le sens de la flèche **F₂** amène l'extrémité du bras élastique **46** à appuyer sur le pion **45**, après que cette extrémité du bras élastique ait échappé à la butée **43**. Le déplacement de la bride **10** dans le sens de la flèche **F₂** a permis de mettre le ressort **40** en compression, de sorte que la bride **10** peut être de nouveau déplacée automatiquement par le soulèvement du bras élastique **46** par le pion **45.** La présence des profils inclinés **50**, **51** facilite l'opération de réarmement de la bride **10**. Il est clair que les opérations d'armement et de réarmement de la bride **10** peuvent être effectuées plusieurs fois, autorisant autant d'opérations de démontage et de remontage de l'auxiliaire qui présente une totale réversibilité de montage.

Le montage de l'auxiliaire **1** sur la paroi **2** découle directement de la description qui précède.

La bride **10** est montée dans le support **13** et déplacée dans le sens de la flèche **F₂** pour comprimer le ressort **40** et jusqu'à venir en appui sur la butée **43.** Dans cette position illustrée à la Fig. **7**, le ressort est comprimé et la bride **10** occupe une position de déverrouillage pour laquelle les contre-rampes **27** occupent une position autorisant le rapprochement entre le boîtier **3** et le support **13**.

Le corps **5** du boîtier **3** est engagé dans le trou **6** de la paroi **2** jusqu'à la mise en butée de la collerette **4** sur la première face **2₁** de la paroi. Le support **13** est alors emboîté à partir de l'extrémité **9**, sur le corps **5**. Le déplacement axial du support **13** amène les contre-rampes **27** à venir s'établir sensiblement au niveau des rampes **28**. Simultanément, le fond **15** du boîtier se retrouve à proximité de la deuxième face **2₂** de la paroi, de sorte que le pion **45** se trouve repoussé à l'intérieur du support **13**. Le déplacement axial du pion **45** conduit au soulèvement du bras élastique **46** qui échappe ainsi à la butée **43**. La bride **10** se trouve alors libérée de sorte que, sous l'action du ressort **40**, la bride **10** est entraînée automatiquement en rotation dans le sens de la flèche **F₁**. La rotation de la bride **10** dans le sens **F₁** provoque l'engagement des contre-rampes **27** sur les rampes **28**. La rotation de la bride **10** est assurée jusqu'à obtenir la mise en appui du fond **15** sur la deuxième face **2₂** de la paroi, alors que la collerette **4** est en appui sur la première face **2₁** de la paroi. L'auxiliaire **1** est ainsi monté, sans jeu axial, sur la paroi **2**. Le ressort **40** assure le maintien des rampes **28** et des contre-rampes **27** dans leur position d'engagement.

Il doit être noté que l'auxiliaire **1** présente, en position montée, un encombrement axial limité, compte tenu notamment de l'imbrication entre les rampes **28** et les contre-rampes **27**, et par suite entre le corps **5** et le support **13**. Dans ce sens, il est à noter que le support **13** est pourvu d'une réservation **50** adaptée pour le passage d'un câble **51** de raccordement ou d'alimentation du boîtier **3**. Avantageusement, la sortie du câble **51** est aménagée sur le corps **5**, sensiblement au niveau du plan dans lequel sont aménagées les rampes **28**. Tel que cela ressort de la **Fig. 1**, le câble **51** sort latéralement ou sensiblement perpendiculairement à l'axe **x** du corps **5**. Le câble **51** est destiné à traverser la jupe **16** du support par un trou **54** débouchant dans la réservation **50** aménagée dans le support entre la jupe **16** et le rebord **17**. La réservation **50** est ainsi réalisée dans le support entre deux contre-rampes **27** voisines. Le passage du câble **51** sensiblement dans le plan d'extension des rampes **28** et des contre-rampes **27** permet de limiter l'encombrement axial de l'auxiliaire. La réservation **50** débouche dans le rebord périphérique **17** et reçoit par exemple une bride de blocage **56**. Bien entendu, la bride **10** est ouverte sur une plage angulaire suffisante afin que la réservation **50** ne gêne pas la rotation de la bride.

L'invention n'est pas limitée aux exemples décrits et représentés car diverses modifications peuvent y être apportées sans sortir de son cadre.

## Revendications

1. Auxiliaire de commande, de signalisation et/ou d'avertissement destiné à être fixé sur une paroi (**2**)**,** l'auxiliaire comportant :
- un boîtier (**3**) comportant une collerette d'appui (**4**) sur une première face de la paroi, et à partir de laquelle s'étend un corps tubulaire (**5**) d'axe longitudinal (**x**) destiné à traverser un trou (**6**) aménagé dans la paroi (**2**),
- une bride (**10**) destinée à être montée du côté de la deuxième face de la paroi, et présentant un alésage (**12**) d'emboitement pour le corps (**5**) du boîtier de commande,
**caractérisé en ce qu'**il comporte des moyens ponctuels de verrouillage (**26**) comportant au moins une face ponctuelle de verrouillage (**27**) aménagée sur la bride ou le corps selon une plage angulaire limitée, et au moins une rampe ponctuelle (**28**) avec un profil en hélice centré sur l'axe longitudinal (**x**) et aménagée respectivement sur le corps ou la bride selon une plage angulaire limitée, ces moyens ponctuels de verrouillage (**26**) étant aptes à occuper une position de déverrouillage pour laquelle la bride (**7**) et le boîtier (**3**) peuvent être rapprochés axialement jusqu'à une position où une rotation relative autour de l'axe entre la bride (**10**) et le boîtier (**3**) assure une coopération entre la face ponctuelle et la rampe ponctuelle, conduisant à un rapprochement axial entre la bride et le boîtier et leur verrouillage.

2. Auxiliaire selon la revendication **1**, **caractérisé en ce qu'**il comporte :
- un organe (**40**) élastique de déplacement en rotation, autour de l'axe, de la bride (**10**), sollicitant la bride (**10**) en position de déverrouillage,
- des moyens de blocage (**43**) de la bride en position de déverrouillage et des moyens (**45**) de libération de la bride (**10**) pour autoriser le passage automatique de la bride de sa position de déverrouillage à sa position de verrouillage.

3. Auxiliaire selon la revendication **2**, **caractérisé en ce que** l'organe de déplacement (**40**) est un ressort de rappel interposé entre la bride mobile (**10**) et un support (**13**) de montage de la bride.

4. Auxiliaire selon les revendications **2** et **3**, **caractérisé en ce que** les moyens (**45**) de libération de la bride comportent un téton mobile de déblocage s'étendant en saillie à partir du fond (**15**) du support destiné à être en appui sur la deuxième face de la paroi, de manière que son déplacement entraîne automatiquement la libération de la bride (**10**).

5. Auxiliaire selon la revendication 2, **caractérisé en ce que** les moyens de blocage (**43**) comportent des moyens (**50**, **51**) assurant le retour réversible de la bride (**10**) de sa position de libération à sa position de blocage lors de la rotation de la bride, selon un sens contraire (**F₂**) au sens de rotation **(F₁)** conduisant au passage de la position de déverrouillage à la position de verrouillage.

6. Auxiliaire selon l'une des revendications 2 à 5, **caractérisé en ce que** les moyens de blocage (**43**) comportent une butée portée par le support ou la bride coopérant avec un bras élastique (46) porté respectivement par la bride mobile (**10**) ou le support.

7. Auxiliaire selon la revendication 1, **caractérisé en ce que** les moyens ponctuels de verrouillage (**26**) comportent une série de rampes ponctuelles (**28**) distribuées à la périphérie du corps ou de la bride selon un profil en hélice, et une série de faces ponctuelles telles que des contre-rampes (**27**) distribuées à la périphérie respectivement de la bride ou du corps, selon un profil en hélice, les rampes (**28**) délimitant entre elles des passages axiaux (**31**) pour les contre-rampes (**27**) qui délimitent entre elles des passages axiaux (**32**) pour les rampes.

8. Auxiliaire selon la revendication 1 ou 7, **caractérisé en ce que** les rampes (**28**) et contre-rampes (**27**) sont aménagées de manière à coopérer mutuellement sur une course angulaire adaptée pour assurer un rapprochement axial suffisant entre le boîtier et la bride, afin de s'adapter aux différentes épaisseurs des parois (**2**) de montage.

9. Auxiliaire selon la revendication 7 ou 8, **caractérisé en ce que** chaque rampe (**28**) ou contre-rampe (**27**) présente une pente inférieure à 30 degrés par rapport au plan perpendiculaire à l'axe longitudinal.

10. Auxiliaire selon la revendication 7, 8 ou 9, **caractérisé en ce que** chaque rampe (**28**) et/ou contre-rampe (**27**) est pourvue d'un revêtement anti-dérapant.

11. Auxiliaire selon la revendication 1, **caractérisé en ce que** la bride (**10**) est réalisée par une bague ouverte guidée en rotation par une jupe (**16**) portée par le support (**13**) et délimitant un passage (**14**) de réception du corps (**4**) du boîtier.

12. Auxiliaire selon la revendication 7, **caractérisé en ce que** les rampes (**28**) et les contre-rampes (**27**) délimitent au moins un passage pour le positionnement d'un câble de raccordement (**51**).
